# EUROPEAN PATENT SPECIFICATION

(11) **EP 1 297 711 B1**
(45) Date of publication and mention of the grant of the patent: **11.04.2007**
(21) Application number: 00942104.1
(22) Date of filing: 20.06.2000
(51) Int. Cl.: H04N 17/00

(54) **METHOD AND ENCODING/DECODING DEVICE FOR ASSESSING THE PICTURE QUALITY OF REPRODUCED IMAGE DATA**
VERFAHREN UND KODIER-/DEKODIER-ANORDNUNG ZUR BEWERTUNG DER BILDQUALITÄT VON REPRODUZIERTEN BILDDATEN
PROCEDE, ET DISPOSITIF DE CODAGE/DECODAGE, DESTINES A EVALUER LA QUALITE IMAGE DE DONNEES D'IMAGE REPRODUITE

(43) Date of publication of application: 02.04.2003
(73) Proprietor: Nederlandse Organisatie voor toegepast-natuurwetenschappelijk Onderzoek TNO, 2628 VK Delft (NL)
(72) Inventor: HEKSTRA, Andries, Pieter, NL-2252 KM Voorschoten (NL); BEERENDS, John, Gerard, NL-4585 PB Hengstdijk (NL); DE CALUWE, Franciscus, Elisabeth, NL-1057 VE Amsterdam (NL); KOENEN, Robert, Hendrik, NL-3071 AW Rotterdam (NL)
(74) Representative: Prins, Adrianus Willem
(86) International application number: PCT/EP2000/005682
(87) International publication number: WO 2001/099433

(56) References cited:
- EP-A- 0 508 459
- EP-A- 0 789 497

## Description

Transmission chains for transmitting audiovisual information from an information source to a user, or mutually between users, particularly digital transmission chains, contain coding and decoding devices (codecs) with the object of reducing the size of the amount of data to be transmitted as far as possible. A frequently used technique is compressing the audio and image data using appropriate compression algorithms which, however, to a greater or lesser extent affect the quality of the transmitted information. The picture quality of reproduced image data from transmitted, dissipatively compressed original image data will therefore always be inferior to the picture quality of the original image data. Of course, this applies likewise to audio data in the event of, e.g., audiovisual signals.

For assessing the picture quality of reproduced image data, in practice, inter alia, test subjects are used who assess the reproduced images. In this connection, the term perceptive quality measurement is used. Since in practice operating with test subjects is expensive and time-consuming, systems have been developed to automatically determine the quality score using assessment techniques. In this case, the term objective quality measurement is used as well.

Test subjects may also have a relevant opinion on the quality without comparing the image and/or sound reproduced with the original image and/or sound. Automatic processing systems using computer models of the human observation, however, always require information on the original signal to be capable of arriving at an objective quality assessment, i.e., information which defines the signal or the signal itself, as the case may be.

In a laboratory situation, it is possible to encode (compress) and to decode (decompress) an audiovisual signal in such a manner that the transmitted signal and the original signal are physically available at one and the same location, e.g., since the entire process occurs in one and the same computer, or since the original signal and the reproduced signal have been stored on non-dissipative recording media from which it is permitted to read and assess information synchronously.
The U.S. patent 5,574,500 describes video-quality assessment equipment for assessing the picture quality from dissipatively compressed original image data to be transmitted. In this connection, in a laboratory situation corresponding portions (blocks) of the original video or image data and the reproduced video or image data are assessed.
The European patent application EP-A-0789497 discloses a method and a device for assessing picture quality of reproduced image data from transmitted, dissipatively compressed original image data by comparing original frames of image data with corresponding frames of reproduced data. To this end reference frames (i.e. the original data) may be transported as ancillary data at low duty cycle to the receiving end to be compared with corresponding processed (i.e. reproduced frames.
In practice, however, there are also many situations in which the quality score of, e.g., image data must be determined at the location of receipt, where the original image data is of course not available.
The invention is founded, therefore, on the assignment to be capable of reliably deploying objective quality-assessment algorithms in those situations, the original image data not being available at the location where the reproduced image data is available.
According to the invention, said assignment is solved in such manner that, for assessing the picture quality of the reproduced image data, information is additionally transmitted from a portion of the original image data in encrypted form.
The method according to the invention is based on the inevitable transmission of information from the original signal, such as a portion of the original image data or parameters defining a portion of the original image data etc. Since, according to the invention, said information on the original image data to be applied for quality assessment, is transmitted in encrypted form, however, a designer of an encoding/decoding device is not permitted to undesiredly influence the quality assessment to his advantage. Due to the encryption, it is effectively prevented that, e.g., in the event of a cascade of codecs, in the reproduced image data of a preceding codec, the portion relevant to the quality assessment is replaced by the additionally transmitted portion of the original image data. Encoding (compressing) the image data processed in this manner by the next codec would then, when assessing the quality of the reproduced image data at the output of the next codec, cause a naturally incorrect result.

In a further embodiment of the method according to the invention, information from a (pseudo) random portion of the original image data and data for identifying said portion are each time transmitted in encrypted form. This way, it is guaranteed that a designer can neither affect the quality assessment, by compressing the information of a fixed portion of the image data which is produced for assessing the picture quality with a higher quality, simply by reserving more bits for this portion than for the remainder of the image.

A still further protection against undesired affecting the quality assessment is obtained, according to a further embodiment of the method according to the invention, by having the method of encryption changed at least regularly. Even if the designer of a codec were successful in deciphering the encryption code and replacing, in a cascade of codecs, the portion of the reproduced image data applied for the quality assessment by the deciphered portion of the original image data, even then this will offer solace only until the encryption is modified once more. As is known in practice, modification of the encryption on the one hand may take place by means of modifying suitable keys and/or on the other hand by modifying the encoding algorithms themselves.

In a still further embodiment of the method according to the invention, the information of the original image data for assessing the picture quality is subjected to an authenticating action, such as a digital signature. In doing so, it is prevented that a designer replaces the portion of the original image data transmitted for the quality assessment by something which better corresponds to the same portion of the reproduced image data, in order to obtain a more favourable quality assessment. Due to the authentication action, such as the digital signature, such a manipulation may be effectively discovered.

The quality measured may represent an average quality or, e.g., a "worst case". In the latter case, the invention provides for applying, with a view to assessing the picture quality, a hard-to-compress, from the viewpoint of quality, portion or portions of the original image data, e.g., portions in which large signal transitions occur, such as extreme brightness and contrast differences.

In a still further embodiment of the method according to the invention, the information of the original image data for assessing the picture quality is periodically transmitted. For each N transmitted images, e.g., the information in question of the original image data is transmitted only once, where N, e.g., may be 10. Experiments have shown that an objective quality criterion may also be obtained by, e.g., omitting nine out of every ten images when determining the quality. Of course, more or fewer images may be omitted.

For assessing time effects on the picture quality, the invention provides, in a still further embodiment thereof, for transmission of information of the same portions of at least two consecutive images of the original image data for assessing the picture quality.

The portion of the original image data, or the characteristic parameters thereof for assessing the picture quality, as the case may be, are preferably transmitted in a non-dissipative, non-compressed way, the amount of information being capable of being adjusted to the available transmission capacity. When more data needs to be transmitted than is possible with the available transmission capacity, an embodiment of the method according to the invention provides for transmission of the information of the original image data for assessing the picture quality in a qualitatively higher compressed form than the image data transmitted for reproducing an image, preferably in a substantially non-dissipatively compressed form.

When assessing the eventual picture quality, of course the differences in coding quality may be taken into account with which the image data to be reproduced are encoded, as well as the encoding of the portion applied for quality assessment of the original image data.

In the above, it was assumed that, in order to be capable of assessing the "coding quality", the image data used for this purpose is transmitted undisturbed. For those skilled in the art, however, it will be obvious that, during the transmission of the image data, transmission errors may occur, as a result of which, e.g., the entire image or large portions thereof may be seriously disturbed. Whenever such transmission errors also occur in the portions of the image provided for assessing the picture quality, it will be clear that the quality values then obtained regarding the coding quality are unusable.

That is why, in a further embodiment of the method according to the invention, this embodiment provides for the transmission, together with the information of a portion of the original image data to be transmitted for assessing the picture quality, of transmitted a portion of the original data representative of the entire image and this is compared, by the receiver, to the reconstructed image for assessing the transmission quality.

This portion, too, may be transmitted in encrypted form to exclude, as far as possible, possibly undesirable use for the benefit of the reproduced image data.

The representative portion in question preferably is a sharply reduced version of the original image, in the form of a so-called "icon". On the basis of such an icon it may then be checked whether portions of the image contain very gross errors. In conformity with the method according to the invention, assessing the picture quality may be carried out only when the transmission quality exceeds a predetermined value or threshold.

It will be clear that, with such a total-picture representation in addition to the coding quality, there may also be given an opinion on the transmission quality of a communication link or transmission chain.

For assessing the picture quality, assessment algorithms may be applied which are known per se, or computer models, as the case may be, of the human observation as described, inter alia, in "Digital Images and Human Vision", compiled by Andrew B. Watson, The MIT Press publishers, 1993, Chapter 14, pp. 179-206.

The invention also relates to an encoding device for use in assessing the picture quality of reproduced image data from transmitted dissipatively compressed original image data, comprising an input for offering original image data and first compression means for dissipatively compressing the offered original image data, characterised by selection means for selecting a portion from the offered original image data, encryption means for encrypting information of the selected portion of the original image data, and transmission means for giving off, at an output, the compressed original image data and the information of the encrypted portion of the original image data. The information may comprise a portion of the original image data or parameters which are representative of said portion etc.

In order to be capable of providing a quality assessment as much protected against manipulation as possible, further embodiments of the encoding device according to the invention provide for the application of selection means for selecting a (pseudo) random portion of the original image data, for encryption means for at least regularly changing the method of encryption, and/or for means for authenticating the information to be transmitted of the portion to be applied for quality assessment of the original image data.

Depending on the available transmission capacity and the size of the portion selected for assessing the image quality of the original image data, in a still further embodiment of the encoding device according to the invention, second compression means are provided for compressing the portion in question of the original image data with a higher quality than the first compression means.

To prevent that the assessment of the quality with which the image data is encoded, is undesirably affected by transmission errors, the encoding device according to the invention, in a still further embodiment thereof, also provides for means of forming, from the image data offered at the input, a portion representative of the entire image, such as a sharply reduced version of the original image in the form of an "icon".

The portion of the original image data to be transmitted for the picture quality and the portion representative of the entire image of course should be only a fraction of the image data to be transmitted for reconstructing the entire image. The signals in question are preferably encrypted as a whole and transmitted in an authenticated manner.

The invention also relates to a decoding device to be used in assessing the picture quality of reproduced image data from transmitted dissipatively compressed original image data, comprising an input for offering transmitted image data, and first decompression means for reproducing, from the transmitted dissipatively compressed image data, image data for giving off, at an output, reproduced image data characterised by splitting means for selecting, from the transmitted image data, encrypted information of a portion of the original image data, ciphering means for deciphering the encrypted information of the selected portion of the original image data, and means for assessing the deciphered portion of the original image data and a corresponding portion of the reproduced image data, for assessing the picture quality.

In further embodiments, the decoding device according to the invention is arranged for assessing the picture quality of a varying portion of the image data, depending on transmitted identification data, the deciphering means are arranged for at least regularly changing the way of deciphering, all this in cooperation with the encrypting means of the encoding device, and means are provided for de-authenticating the information provided with, e.g., a digital signature, of the additionally transmitted portion of the original image data for assessing the picture quality.

The means for de-authenticating the additional image data may advantageously be arranged in such a manner that a warning signal is given off when the de-authentication fails, and therefore whenever the "signature" proves to be false.

The decoding device according to the invention may furthermore be provided with second decompression means for decompressing the information, possibly transmitted in compressed form, of the portion of the original image data for assessing the picture quality and, in a still further embodiment, of means for assessing, from a transmitted representative portion of the original image data, the transmission quality, such to prevent, as much as possible, an erroneous assessment of the picture quality as a result of transmission errors and the like.

In a still further embodiment of the decoding device according to the invention, the splitting means comprise a demultiplexer for feeding, from the transmitted image data to the first decompression means, the dissipatively compressed image data, for feeding, to the deciphering means, the encrypted information of the portion of the original image data and, if applicable, for feeding, to the means for assessing the transmission quality, the portion representative of a complete image of the image data, if necessary after deciphering it.

The coding device and the decoding device according to the invention may be combined into a single coding and decoding device.

The invention also relates to a quality-assessment unit for using with a coding/decoding device for assessing the picture quality of reproduced image data from transmitted dissipatively compressed image data and encrypted information of a portion of the original image data, comprising at least the selection means, the encrypting means and, if applicable, the means for forming a portion representative of the entire image on the one hand and at least the splitting means, the deciphering means, the assessment means and, if applicable, the means for assessing the transmission quality on the other hand.

Below, the invention is explained in more detail with reference to the enclosed drawing, of which:
FIG. 1 in the form of a block diagram shows a preferred embodiment of the encoding device according to the invention, and
FIG. 2 in the form of a block diagram shows a preferred embodiment of a decoding device according to the invention.

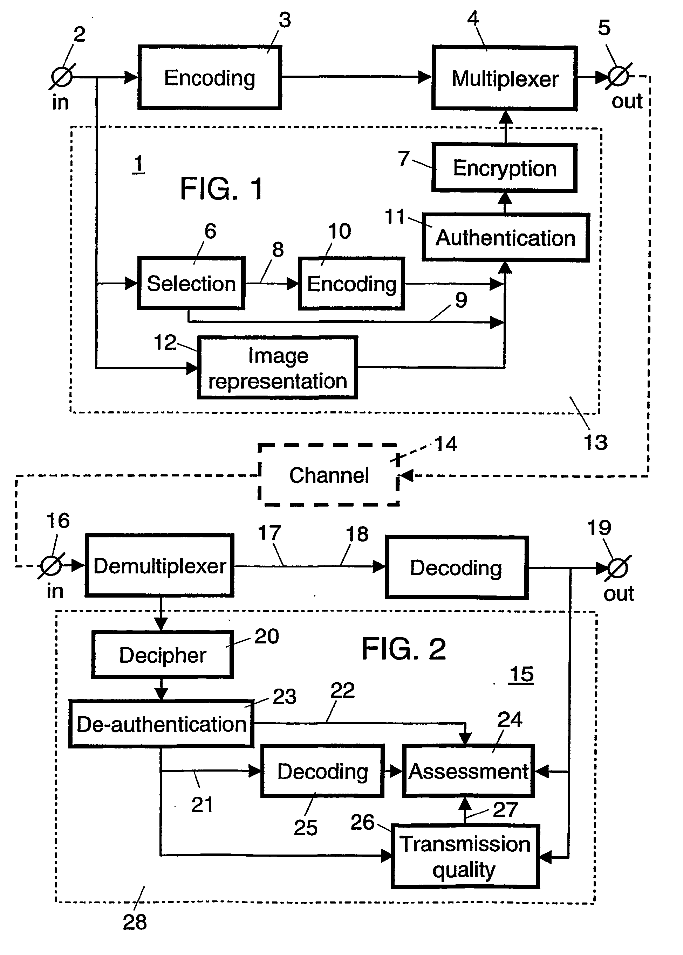

With reference to FIG. 1, reference numeral 1 represents a preferrred embodiment of an encoding device according to the invention, built up from an input 2 for feeding, to first compression or encoding means 3, image data which, together with audio data if so desired, is available in compressed form by way of transmission means 4 at an output 5 of the encoding device 1. For compressing or encoding image data, as the case may be, compression algorithms may be applied which are known per se, such as they are known, inter alia, under the acronyms ISO MPEG-2, ITU-T, H.263 etc. Such compression means are known, inter alia, from ISO and ITU literature.

In accordance with the invention, selection means 6 are provided for selecting a portion of the original image data offered on the input 2 for the benefit of quality assessment. The selection means 6 are preferably arranged in such a manner that they select a random or pseudo random portion of the original image data, including a portion of the image data which is hard to compress from a quality viewpoint, i.e., image data having, e.g., strongly varying signal transitions.

The portion of the original image data selected for quality assessment, or parameters and data representative of this portion for identifying said portion, denoted by the reference numerals 8 and 9, respectively, are offered from the selection means 6 to encrypting or enciphering means 7.

The encrypting means 7 encrypt the data offered according to an encrypting algorithm to be chosen, such as, e.g., the RSA (Rivest, Shamir, Adleman) "public-key" algorithm or the DES (= Data Encryption Standard) "private-key" algorithm. Encrypting means 7 suitable for this purpose are described in many textbooks, including "Applied Cryptography", by Bruce Shneier, 2nd Edition, John Wiley & Sons 1995.

The data encrypted in this manner is then offered to the transmission means 4 for transmitting it, in the embodiment shown, together with the image data dissipatively compressed by the first compression means 3, from the output 5 of the encoding device 1.

The selection means 6 are preferably arranged in such a manner, that they select only a minimum portion of the original image data required for assessing the picture quality, which, after encryption by the encrypting means 7, results in a fraction of the image data or parameters, as the case may be, to be transmitted for reproducing an image. When selecting, it is also possible to take the transmission capacity of a communication link, transmission chain or channel 14 into account.

Depending on the system dimensions, it may be necessary to transmit the encrypted image data in compressed or encoded form, as the case may be, to which end, in the diagram of FIG. 1, second encoding or compression means 10 are coupled between the selection means 6 and the encrypting means 7. Said second compression means 10 should compress the image data with a higher quality than the first compression means 3, preferably non-dissipatively in as far as possible. Compression means suitable for this purpose are known, inter alia, as ZIV-LEMPEL.

The encrypting means 7 prevent that the portion of the original image data added to the outgoing data flow for quality assessment be used for manipulating the quality assessment, e.g., by replacing, in a cascade of encoding devices, the reproduced image data with the relevant portion of the original image data and by subsequently encoding and transmitting, by way of the next encoding device, the image composed in this manner. By regularly modifying the encrypting algorithm or the enciphering keys, as the case may be, said form of possible manipulation is effectively prevented, even if the encryption might have become known.

By additionally subjecting information to be transmitted for assessing the picture quality of a portion of the original image data to an authenticating activity, such as, e.g., placing accross said image data a digital signature, it may also be prevented that a designer replace the portion of the original image information with something which better corresponds to the reproduced image data, so that eventually the quality assessment is not made on the basis of the transmitted portion of the original image data but on a surrogate thereof. To this end, in the block diagram of FIG. 1 authentication means 11 are connected between the selection means 6 and the encrypting means 7. In practice, suitable authenticating algorithms are known per se.

With the selection means 6 arranged for selecting a varying portion of the original image data, with the encrypting means 7 which, if so desired, regularly vary the way of encrypting, and by way of the authenticating means 11, a transmission is provided which is ideally protected against manipulation of the original image data for quality assessment.

FIG. 2 shows a decoding device 15 according to the invention, comprising an input 16 for receiving transmitted image data. Image data offered at the input 16 is split, by splitting means 17, into dissipatively compressed image data for reproducing the original image by way of first decompression or decoding means 18 and into further data for assessing the picture quality. The image data reproduced by the first decompression means 18 is available at an output 19 of the decoding device 15.

The portion of the original data transmitted for the quality assessment is fed, after having been split off by the splitting means 17, to deciphering means 20, which results in the information concerning the portion of the original image data transmitted for assessing the picture quality and in identification data for identifying the corresponding portion of the reproduced image data, denoted by the reference numerals 21 and 22, respectively.

The deciphered image data 21, depending on the setup of the encoding means 1, preceding the assessment of the picture quality via assessment means 24, is fed to the de-authenticating means 23 if necessary, for de-authenticating the original image data, in such a way that the authentic portion of the original image data for assessing the picture or encoding quality, as the case may be, be actually applied.

The means for de-authenticating the supplementary image data may be advantageously arranged in such a manner that a warning signal is given off when the de-authentication fails, and therefore, if the "signature" proves to be false. The information will then of course not be used for quality assessment.

In the event that the information received is reliable, the assessment means 24 receive the identification data 22 from the deciphering means 20 or the de-authenticating means 23, as the case may be, and select from the reproduced image data at the output 19 of the decoding device 15 the portion relevant to the quality assessment.

For assessing the picture quality, i.e., the "encoding or compression quality", the assessment means 24 may make use of suitable assessment algorithms such as, e.g., described in "Digital Images and Human Vision", compiled by Andrew B. Watson, The MIT Press, 1993, Chapter 14, pp. 179-206.

Whenever the information of the selected portion of the original image data for assessing the picture quality is also transmitted in compressed or encoded form, as the case may be, second decoding or decompression means 25 are provided which are coupled between the deciphering means 20 and the assessment means 24. The second decompression means 25 decompress the data offered with a higher quality than the first decompression means 18.

For assessing the picture quality in this case, the difference in compression or encoding quality between the first compression means 3, the second compression means 10, and the first decompression means 18 and the second decompression means 25, respectively, may be charged against the eventual quality assessment.

Whenever a portion representative of the entire image, e.g., in the form of an "icon", is available, such as those provided by means 12 in the encoding device 1 which, from the image data at the input 2 form a portion representative of the entire image, in the decoding device 15, means 26 may also be provided for assessing the transmission quality. Said means 26 receive, on the one hand, the "icon" in question and, on the other hand, the reproduced image data at the output 19 of the decoding device 15. Whenever, from a comparison of the data in question, it is observed that, e.g., large portions of the image are missing or deviate too much, the transmission-quality-assessment means 26 are arranged for giving off, to a control input of the assessment means 24, a disabling signal 27, with which the quality assessment for the image in question is disabled. As a result, it is effectively prevented that the assessment of the picture quality becomes undesirably dependent on the transmission quality of channel 14. Algorithms suitable for assessing the transmission quality are known per se in practice.

It is also advantageously possible to both increase the quality of the source encoding, i.e., the second compression means 10, and the quality of the channel encoding, i.e., the quality of the tranmission quality, of the supplementarily transmitted information for assessing the picture quality, with respect to the image data to be transmitted. For this purpose, e.g., the transmission means 4 may be suitably arranged. There may be thought of supplementary error-correction provisions for the information in question etc.

It will be understood by those skilled in the art that the algorithms and keys used by the deciphering means 20 are associated with the encrypting means 7 in the encoding device 1 in such a manner that, if so desired, the encryption or decryption, as the case may be, may be regularly modified.

Although in the above it was assumed that the selection means 6 in the encoding device 1 automatically select a portion of the original image data for quality assessment, this of course may also be carried out under manual control, e.g., using a joy stick or the like (not shown). A selection on the basis of the result of the assessment means 24 is also possible, particularly then when an encoding device 1 and a decoding device 15 are combined to form a signal coding/decoding device, also called codec.

The selection means 6, the encryption means 7 and, if applicable, the second compression means 10, the authenticating means 11 and the means 12 for selecting a portion of the encoding device 1 representative of the entire image may advantageously be provided as one separate quality-assessment unit 13. Said quality-assessment unit may then be applied to generally known compression or decompression devices, comprising the first compression means 3 and the transmission means 4, which are generally constructed in the form of a multiplexer.

Likewise, the decrypting means 20, the assessment means 24 and, if applicable, the de-authenticating means 23 of the decoding device 15, the second decompression means 25 and the means 26 for assessing the transmission quality, may be combined to form one single unit 28. Said unit 28 may be applied to generally known decoding devices, comprising the first decompression means 18 and the splitting means 17, which may be constructed as a demultiplexer.

In the event of a combined coding/decoding device, the separate units 13 and 28 may also be combined to form one single separate quality-assessment unit or "Q box". Such a Q box may be provided separately and sealed or otherwise protected, as a result of which a still further protection against undesirable manipulations is achieved.

It has become apparent that, for assessing the picture quality or the encoding quality, as the case may be, of an coding/decoding device, not all images need be continuously assessed. Since the momentary quality (per image) shows up a time-continuous behaviour, it will suffice, e.g., to analyse 1 out of every 10 images or, generally speaking, 1 out of every N images, where N is an integer greater than 1. Time effects may be studied by analysing the same portion of two consecutive images using the assessment means 24.

It will be understood that a person skilled in the art, on the basis of the inventive idea, retaining the advantages thereof, may provide different practical coding and decoding devices, e.g., through a different mutual sequencing of the various blocks from the ones shown in figures FIG. 1 and 2. Therefore, the representation of the entire image may be transmitted unencryptedly or, e.g., encoded by way of the second decoding means 10, which alternatives are comprised within the framework of the invention by the enclosed claims. The various functional blocks may be advantageously implemented in a processor, a special integrated semiconductor circuit ("Application Specific Integrated Circuit" or ASIC) or the like

## Claims

1. Method for assessing the picture quality of reproduced image data from transmitted, dissipatively compressed original image data, by assessing corresponding portions of the original image data and the reproduced image data, **characterized in that**, for assessing the picture quality of the reproduced image data, information of the corresponding portions of the original image data is supplementarily transmitted in encrypted form.

2. Method according to claim 1, **characterised in that** the supplementary transmitted information of the original image data comprises a portion of the original image data itself.

3. Method according to claim 1, **characterised in that** the supplementary transmitted information of the original image data comprises parameters representative of the corresponding portions of the original image data.

4. Method according to claim 2 or 3, **characterised in that** the supplementary transmitted information of the original image data comprises a (pseudo) random portion of the original image data, and data for identifying said portion.

5. Method according to one or more of the preceding claims, **characterised in that** the way of encrypting is changed at least regularly.

6. Method according to one or more of the preceding claims, **characterised in that** the supplementary transmitted information of the original image data is subjected to an authenticating activity, such as a digital signature.

7. Method according to one or more of the preceding claims, **characterised in that**, the supplementary transmitted information of the original image data comprises, from a quality viewpoint, a hard-to-compress portion of the original image data.

8. Method according to one or more of the preceding claims, **characterised in that** the supplementary transmitted information of the original image data is transmitted periodically.

9. Method according to claim 8, **characterised in that**, for each N transmitted images, information of a portion of the original image data is transmitted, where N>1, e.g., N=10.

10. Method according to one or more of the preceding claims, **characterised in that** information of the same portions of at least two consecutive images of the original image data is transmitted for assessing the picture quality.

11. Method according to one or more of the preceding claims, **characterised in that** the supplementary transmitted information of the original image data is transmitted in a qualitatively higher compressed form than the image data transmitted for reproducing an image, preferably in a substantially non-dissipatively compressed form.

12. Method according to one or more of the preceding claims, **characterised in that**, the supplementary transmitted information of the original image data, comprises a portion of the original image data representative of the entire image.

13. Method according to claim 12, **characterised in that** the portion representative of the entire image is a sharply reduced version of the original image, in the form of an "icon".

14. Method according to one or more of the preceding claims, **characterised in that** the assessment of the portions for assessing the picture quality is carried out only if the transmission quality exceeds a predetermined value.

15. Encoding device (1) to be used when assessing the picture quality of reproduced image data from transmitted, dissipatively compressed original image data, comprising an input (2) for offering original image data, and first compression means (3) for dissipatively compressing the offered original image data, **characterised by** selection means (6) for selecting a portion from the offered original image data, encryption means (7) for encrypting information of the selected portion of the original image data, and transmission means (4) for giving off, at an output (5), the compressed original image data and the encrypted information of the portion of the original image data.

16. Encoding device according to claim 15, **characterised in that** the selection means (6) are arranged for selecting a (pseudo) random portion of the original image data, and for providing data for identifying the selected portion.

17. Encoding device according to one or more of claims 15 or 16, **characterised in that** the encrypting means (7) are arranged for at least regularly changing the way of encrypting.

18. Encoding device according to one or more of claims 15 to 17 inclusive, **characterised in that** means (11) for authenticating the portion selected by the selection means of the original image data are provided.

19. Encoding device according to one or more of claims 15 to 18 inclusive, **characterised in that**, between the output (5) and the selection means (6), second compression means (10) are coupled for compressing the selected portion of the original image data with a higher quality than the first compression means.

20. Encoding device according to one or more of claims 15 to 19 inclusive, **characterised by** means (12) for forming, from the offered image data, a portion representative of the entire image, preferably a sharply reduced version of the original image in the form of an "icon".

21. Encoding device according to claim 20, **characterised in that** the transmission means comprise a multiplexer (4) for giving off at the output (5), as a whole, image data compressed by the first compression means and information encrypted by the encryption means from a portion of the original data and from a portion representative of the entire image of the original image data.

22. Encoding device according to claim 20 or 21, **characterised in that** the transmission means are arranged for transmitting, with a higher transmission quality, the information originating from the encrypting means (7) in comparison to the information originating from the first compression means (3), such as with an improved error-detection and/or error-correction provision.

23. Encoding device according to one or more of claims 15 to 22 inclusive, **characterised in that** at least the selection means (6), the encrypting means (7) and, if applicable, the means (12) for forming a portion representative of the entire image are formed to be a separate unit.

24. Decoding device (15) to be used when assessing the picture quality of reproduced image data from transmitted, dissipatively compressed original image data, comprising an input (16) for offering transmitted image data, and first decompression means (18) for reproducing image data from transmitted, dissipatively compressed image data, for giving off, at an output (19), reproduced image data,
**characterised by** splitting means (17) for selecting, from the transmitted image data, encrypted information of a selected portion of the original image data, deciphering means (20) for deciphering the encrypted information of the original image data, and means (24) for assessing the deciphered portion of the original image data and a corresponding portion of the reproduced image data, for assessing the picture quality.

25. Decoding device according to claim 24, **characterised in that** the splitting means (17) are arranged for selecting, from the image data received, identification data for the assessment means (24), for selecting, from the reproduced image data, a portion indicated by the identification data.

26. Decoding device according to claim 24 or 25, **characterised in that** the deciphering means (20) are arranged for at least regularly changing the way of deciphering.

27. Decoding device according to one or more of claims 24 to 26 inclusive, **characterised in that** means (23) for de-authenticating the information of a portion of the original image data are provided.

28. Decoding device according to one or more of claims 24 to 27 inclusive, **characterised in that** second decompression means (25) are coupled between the splitting means (17) and the assessment means (24), for decompressing the information of a portion of the original image data transmitted for assessing the picture quality.

29. Decoding device according to one or more of claims 24 to 28 inclusive, **characterised by** means (26) for, from a transmitted portion representative of a complete image of the original image data, assessing the transmission quality.

30. Decoding device according to one or more of claims 24 to 29 inclusive, **characterised in that** the splitting means comprise a demultiplexer (17) for feeding, from the transmitted image data to the first decompression means (18), the dissipatively compressed image data, for feeding, to the deciphering means (20), the encrypted information of a portion of the original image data and, if applicable, for feeding, to the means (26) for assessing the transmission quality, the portion representative of a complete image of the image data.

31. Decoding device according to one or more of claims 24 to 30 inclusive, **characterised in that** at least the deciphering means (20), the assessment means (24) and, if applicable, the means (26) for assessing the transmission quality, are accomodated in a separate unit.

32. Coding and decoding device, comprising a combination of one or more of claims 15 to 23 inclusive and 24 to 30 inclusive.

33. Quality-assessment unit for use with a coding/decoding device for assessing the picture quality of reproduced image data from transmitted, dissipatively compressed original image data and encrypted information of a portion of the original image data, comprising at least the means as defined in one or both of the claims 23 and 31.

## Patentansprüche

1. Verfahren zur Bewertung der Bildqualität reproduzierter Bilddaten aus übertragenen, verlustbehaftet komprimierten ursprünglichen Bilddaten durch Bewerten entsprechender Teile der ursprünglichen Bilddaten und der reproduzierten Bilddaten, **dadurch gekennzeichnet, daß** zur Bewertung der Bildqualität der reproduzierten Bilddaten Information der entsprechenden Teile der ursprünglichen Bilddaten zusätzlich in verschlüsselter Form übertragen wird.

2. Verfahren nach Anspruch 1, **dadurch gekennzeichnet, daß** die zusätzliche übertragene Information der ursprünglichen Bilddaten einen Teil der ursprünglichen Bilddaten selbst enthält.

3. Verfahren nach Anspruch 1, **dadurch gekennzeichnet, daß** die zusätzliche übertragene Information der ursprünglichen Bilddaten Parameter enthält, die für die entsprechenden Teile der ursprünglichen Bilddaten charakteristisch sind.

4. Verfahren nach Anspruch 2 oder 3, **dadurch gekennzeichnet, daß** die zusätzliche übertragene Information der ursprünglichen Bilddaten einen (pseudo-) zufälligen Teil der ursprünglichen Bilddaten und Daten zur Identifizierung des Teils enthält.

5. Verfahren nach einem oder mehreren der vorhergehenden Ansprüche, **dadurch gekennzeichnet, daß** die Art und Weise des Verschlüsselns zumindest regelmäßig geändert wird.

6. Verfahren nach einem oder mehreren der vorhergehenden Ansprüche, **dadurch gekennzeichnet, daß** die zusätzliche übertragene Information der ursprünglichen Bilddaten einem Authentisierungsvorgang unterzogen wird, wie etwa einer digitalen Signatur.

7. Verfahren nach einem oder mehreren der vorhergehenden Ansprüche, **dadurch gekennzeichnet, daß** die zusätzliche übertragene Information der ursprünglichen Bilddaten von einem Qualitätsstandpunkt einen schwierig zu komprimierenden Teil der ursprünglichen Bilddaten enthält.

8. Verfahren nach einem oder mehreren der vorhergehenden Ansprüche, **dadurch gekennzeichnet, daß** die zusätzliche übertragene Information der ursprünglichen Bilddaten periodisch übertragen wird.

9. Verfahren nach Anspruch 8, **dadurch gekennzeichnet, daß** für jede N übertragenen Bilder Information eines Teils der ursprünglichen Bilddaten übertragen wird, wobei N > 1 und zum Beispiel N = 10 ist.

10. Verfahren nach einem oder mehreren der vorhergehenden Ansprüche, **dadurch gekennzeichnet, daß** Information derselben Teile von mindestens zwei aufeinanderfolgenden Bildern der ursprünglichen Bilddaten zur Bewertung der Bildqualität übertragen wird.

11. Verfahren nach einem oder mehreren der vorhergehenden Ansprüche, **dadurch gekennzeichnet, daß** die zusätzliche übertragene Information der ursprünglichen Bilddaten in einer qualitativ höheren komprimierten Form als die zur Reproduktion eines Bildes übertragenen Bilddaten übertragen wird, bevorzugt in einer im wesentlichen nicht verlustbehaftet komprimierten Form.

12. Verfahren nach einem oder mehreren der vorhergehenden Ansprüche, **dadurch gekennzeichnet, daß** die zusätzliche übertragene Information der ursprünglichen Bilddaten einen Teil der ursprünglichen Bilddaten enthält, der für das gesamte Bild charakteristisch ist.

13. Verfahren nach Anspruch 12, **dadurch gekennzeichnet, daß** der Teil, der für das gesamte Bild charakteristisch ist, eine stark verkleinerte Version des ursprünglichen Bildes in der Form eines "Symbols" ist.

14. Verfahren nach einem oder mehreren der vorhergehenden Ansprüche, **dadurch gekennzeichnet, daß** die Bewertung der Teile zur Bewertung der Bildqualität nur ausgeführt wird, wenn die Übertragungsqualität einen vorbestimmten Wert überschreitet.

15. Kodierungsvorrichtung (1) zur Verwendung bei der Bewertung der Bildqualität reproduzierter Bilddaten aus übertragenen, verlustbehaftet komprimierten ursprünglichen Bilddaten, die einen Eingang (2) zur Bereitstellung ursprünglicher Bilddaten und erste Komprimierungsmittel (3) zum verlustbehafteten Komprimieren der bereitgestellten ursprünglichen Bilddaten aufweist, **gekennzeichnet durch** Auswahlmittel (6) zur Auswahl eines Teils aus den bereitgestellten ursprünglichen Bilddaten, Verschlüsselungsmittel (7) zur Verschlüsselung von Information des ausgewählten Teils der ursprünglichen Bilddaten und Übertragungsmittel (4) zum Ausgeben der komprimierten ursprünglichen Bilddaten und der verschlüsselten Information des Teils der ursprünglichen Bilddaten an einem Ausgang (5).

16. Kodierungsvorrichtung nach Anspruch 15, **dadurch gekennzeichnet, daß** die Auswahlmittel (6) ausgestaltet sind, um einen (pseudo-) zufälligen Teil der ursprünglichen Bilddaten auszuwählen und um Daten zum Identifizieren des ausgewählten Teils zu liefern.

17. Kodierungsvorrichtung nach einem oder mehreren der Ansprüche 15 oder 16, **dadurch gekennzeichnet, daß** die Verschlüsselungsmittel (7) ausgestaltet sind, um zumindest regelmäßig die Art und Weise des Verschlüsselns zu ändern.

18. Kodierungsvorrichtung nach einem oder mehreren der Ansprüche 15 bis 17 einschließlich, **dadurch gekennzeichnet, daß** Mittel (11) zum Authentisieren des durch die Auswahlmittel von den ursprünglichen Bilddaten ausgewählten Teils vorgesehen sind.

19. Kodierungsvorrichtung nach einem oder mehreren der Ansprüche 15 bis 18 einschließlich, **dadurch gekennzeichnet, daß** zwischen den Ausgang (5) und die Auswahlmittel (6) zweite Komprimierungsmittel (10) zum Komprimieren des ausgewählten Teils der ursprünglichen Bilddaten mit einer höheren Qualität als die ersten Komprimierungsmittel gekoppelt sind.

20. Kodierungsvorrichtung nach einem oder mehreren der Ansprüche 15 bis 19 einschließlich, **gekennzeichnet durch** Mittel (12) zum Bilden eines Teils aus den bereitgestellten Bilddaten, der für das gesamte Bild charakteristisch ist, bevorzugt einer stark verkleinerten Version des ursprünglichen Bildes in der Form eines "Symbols".

21. Kodierungsvorrichtung nach Anspruch 20, **dadurch gekennzeichnet, daß** die Übertragungsmittel einen Multiplexer (4) aufweisen, um an dem Ausgang (5) als Ganzes durch die ersten Komprimierungsmittel komprimierte Bilddaten und Information auszugeben, die durch die Verschlüsselungsmittel aus einem Teil der ursprünglichen Daten und aus einem Teil verschlüsselt wurde, der für das gesamte Bild der ursprünglichen Bilddaten charakteristisch ist.

22. Kodierungsvorrichtung nach Anspruch 20 oder 21, **dadurch gekennzeichnet, daß** die Übertragungsmittel ausgestaltet sind, um die von den Verschlüsselungsmitteln (7) stammende Information im Vergleich mit der von den ersten Komprimierungsmitteln (3) stammenden Information mit einer höheren Übertragungsqualität zu übertragen, wie etwa mit einer verbesserten Fehlererkennungs- und/oder Fehlerkorrekturmaßnahme.

23. Kodierungsvorrichtung nach einem oder mehreren der Ansprüche 15 bis 22 einschließlich, **dadurch gekennzeichnet, daß** zumindest die Auswahlmittel (6), die Verschlüsselungsmittel (7) und gegebenenfalls die Mittel (12) zum Bilden eines Teils, der für das gesamte Bild charakteristisch ist, als eine separate Einheit ausgebildet sind.

24. Dekodierungsvorrichtung (15) zur Verwendung bei der Bewertung der Bildqualität reproduzierter Bilddaten aus übertragenen, verlustbehaftet komprimierten ursprünglichen Bilddaten, die einen Eingang (16) zur Bereitstellung übertragener Bilddaten und erste Entkomprimierungsmittel (18) zum Reproduzieren von Bilddaten aus übertragenen, verlustbehaftet komprimierten Bilddaten aufweist, um an einem Ausgang (19) reproduzierte Bilddaten auszugeben, **gekennzeichnet durch** Trennmittel (17) zur Auswahl verschlüsselter Information eines ausgewählten Teils der ursprünglichen Bilddaten aus den übertragenen Bilddaten, Entschlüsselungsmittel (20) zum Entschlüsseln der verschlüsselten Information der ursprünglichen Bilddaten und Mittel (24) zum Bewerten des entschlüsselten Teils der ursprünglichen Bilddaten und eines entsprechenden Teils der reproduzierten Bilddaten zur Bewertung der Bildqualität.

25. Dekodierungsvorrichtung nach Anspruch 24, **dadurch gekennzeichnet, daß** die Trennmittel (17) ausgestaltet sind, um aus den empfangenen Bilddaten Indentifizierungsdaten für die Bewertungsmittel (24) zur Auswahl eines durch die Identifizierungsdaten angegebenen Teils aus den reproduzierten Bilddaten auszuwählen.

26. Dekodierungsvorrichtung nach Anspruch 24 oder 25, **dadurch gekennzeichnet, daß** die Entschlüsselungsmittel (20) ausgestaltet sind, um zumindest regelmäßig die Art und Weise der Entschlüsselung zu ändern.

27. Dekodierungsvorrichtung nach einem oder mehreren der Ansprüche 24 bis 26 einschließlich, **dadurch gekennzeichnet, daß** Mittel (23) zum Aufheben der Authentisierung der Information eines Teils der ursprünglichen Bilddaten vorgesehen sind.

28. Dekodierungsvorrichtung nach einem oder mehreren der Ansprüche 24 bis 27 einschließlich, **dadurch gekennzeichnet, daß** zwischen die Trennmittel (17) und die Bewertungsmittel (24) zweite Entkomprimierungsmittel (25) zum Entkomprimieren der Information eines Teils der ursprünglichen Bilddaten gekoppelt sind, die zur Bewertung der Bildqualität übertragen wird.

29. Dekodierungsvorrichtung nach einem oder mehreren der Ansprüche 24 bis 28 einschließlich, **gekennzeichnet durch** Mittel (26) zur Bewertung der Übertragungsqualität aus einem übertragenen Teil, der für ein vollständiges Bild der ursprünglichen Bilddaten charakteristisch ist.

30. Dekodierungsvorrichtung nach einem oder mehreren der Ansprüche 24 bis 29 einschließlich, **dadurch gekennzeichnet, daß** die Trennmittel einen Demultiplexer (17) aufweisen, um aus den übertragenen Bilddaten den ersten Entkomprimierungsmitteln (18) die verlustbehaftet komprimierten Bilddaten zuzuleiten, um den Entschlüsselungsmitteln (20) die verschlüsselte Information eines Teils der ursprünglichen Bilddaten zuzuleiten und um gegebenenfalls den Mitteln (26) zur Bewertung der Übertragungsqualität den Teil zuzuleiten, der für ein vollständiges Bild der Bilddaten charakteristisch ist.

31. Dekodierungsvorrichtung nach einem oder mehreren der Ansprüche 24 bis 30 einschließlich, **dadurch gekennzeichnet, daß** zumindest die Entschlüsselungsmittel (20), die Bewertungsmittel (24) und gegebenenfalls die Mittel (26) zur Bewertung der Übertragungsqualität in einer separaten Einheit untergebracht sind.

32. Kodierungs- und Dekodierungsvorrichtung, die eine Kombination von einem oder mehreren der Ansprüche 15 bis 23 einschließlich und 24 bis 30 einschließlich aufweist.

33. Qualitätsbewertungseinheit zur Verwendung mit einer Kodierungs-/Dekodierungsvorrichtung zur Bewertung der Bildqualität reproduzierter Bilddaten aus übertragenen, verlustbehaftet komprimierten ursprünglichen Bilddaten und verschlüsselter Information eines Teils der ursprünglichen Bilddaten, die zumindest die Mittel aufweist, wie sie in einem oder beiden der Ansprüche 23 und 31 definiert sind.

## Revendications

1. Procédé pour évaluer la qualité d'image de données d'image reproduites à partir de données d'image d'origine transmises, compressées de manière dispersée, en évaluant des parties correspondantes des données d'image d'origine et les données d'image reproduites, **caractérisé en ce que**, pour évaluer la qualité d'image des données d'image reproduites, des informations des parties correspondantes des données d'image d'origine sont transmises de manière supplémentaire sous une forme cryptée.

2. Procédé selon la revendication 1, **caractérisé en ce que** les informations transmises supplémentaires des données d'image d'origine comportent une partie des données d'image d'origine elles-mêmes.

3. Procédé selon la revendication 1, **caractérisé en ce que** les informations transmises supplémentaires des données d'image d'origine comportent des paramètres représentatifs des parties correspondantes des données d'image d'origine.

4. Procédé selon la revendication 2 ou 3, **caractérisé en ce que** les informations transmises supplémentaires des données d'image d'origine comportent une partie (pseudo) aléatoire des données d'image d'origine, et des données pour identifier ladite partie.

5. Procédé selon une ou plusieurs des revendications précédentes, **caractérisé en ce que** la manière de crypter est changée au moins régulièrement.

6. Procédé selon une ou plusieurs des revendications précédentes, **caractérisé en ce que** les informations transmises supplémentaires des données d'image d'origine sont soumises à une activité d'authentification, telle qu'une signature numérique.

7. Procédé selon une ou plusieurs des revendications précédentes, **caractérisé en ce que**, les informations transmises supplémentaires des données d'image d'origine comportent, d'un point de vue qualité, une partie difficile à compresser des données d'image d'origine.

8. Procédé selon une ou plusieurs des revendications précédentes, **caractérisé en ce que** les informations transmises supplémentaires des données d'image d'origine sont transmises périodiquement.

9. Procédé selon la revendication 8, **caractérisé en ce que**, pour chacune des N images transmises, des informations d'une partie des données d'image d'origine sont transmises, où N > 1, par exemple, N = 10.

10. Procédé selon une ou plusieurs des revendications précédentes, **caractérisé en ce que** des informations des mêmes parties d'au moins deux images consécutives des données d'image d'origine sont transmises pour évaluer la qualité d'image.

11. Procédé selon une ou plusieurs des revendications précédentes, **caractérisé en ce que** les informations transmises supplémentaires des données d'image d'origine sont transmises sous une forme compressée qualitativement supérieure aux données d'image transmises pour reproduire une image, de manière préférée sous une forme compressée sensiblement non-dispersée.

12. Procédé selon une ou plusieurs des revendications précédentes, **caractérisé en ce que**, les informations transmises supplémentaires des données d'image d'origine, comportent une partie des données d'image d'origine représentative de l'image entière.

13. Procédé selon la revendication 12, **caractérisé en ce que** la partie représentative de l'image entière est une version nettement réduite de l'image d'origine, sous la forme d'une "icône".

14. Procédé selon une ou plusieurs des revendications précédentes, **caractérisé en ce que** l'évaluation des parties pour évaluer la qualité d'image est exécutée uniquement si la qualité de transmission dépasse une valeur prédéterminée.

15. Dispositif de codage (1) à utiliser lors de l'évaluation de la qualité d'image de données d'image reproduites à partir de données d'image d'origine transmises, compressées de manière dispersée, comportant une entrée (2) pour offrir des données d'image d'origine, et des premiers moyens de compression (3) pour compresser de manière dispersée les données d'image d'origine offertes, **caractérisé par** des moyens de sélection (6) pour sélectionner une partie à partir des données d'image d'origine offertes, des moyens de cryptage (7) pour crypter des informations de la partie sélectionnée des données d'image d'origine, et des moyens de transmission (4) pour délivrer, au niveau d'une sortie (5), les données d'image d'origine compressées et les informations cryptées de la partie des données d'image d'origine.

16. Dispositif de codage selon la revendication 15, **caractérisé en ce que** les moyens de sélection (6) sont conçus pour sélectionner une partie (pseudo) aléatoire des données d'image d'origine, et pour délivrer des données afin d'identifier la partie sélectionnée.

17. Dispositif de codage selon une ou plusieurs des revendications 15 ou 16, **caractérisé en ce que** les moyens de cryptage (7) sont conçus pour changer au moins régulièrement la manière de crypter.

18. Dispositif de codage selon une ou plusieurs des revendications 15 à 17 incluse, **caractérisé en ce que** des moyens (11) pour authentifier la partie sélectionnée par les moyens de sélection des données d'image d'origine sont fournis.

19. Dispositif de codage selon une ou plusieurs des revendications 15 à 18 incluse, **caractérisé en ce que**, entre la sortie (5) et les moyens de sélection (6), des seconds moyens de compression (10) sont couplés pour compresser la partie sélectionnée des données d'image d'origine avec une qualité supérieure aux premiers moyens de compression.

20. Dispositif de codage selon une ou plusieurs des revendications 15 à 19 incluse, **caractérisé par** des moyens (12) pour former, à partir des données d'image offertes, une partie représentative de l'image entière, de manière préférée une version nettement réduite de l'image d'origine sous la forme d'une "icône".

21. Dispositif de codage selon la revendication 20, **caractérisé en ce que** les moyens de transmission comportent un multiplexeur (4) pour délivrer au niveau de la sortie (5), en tant qu'ensemble, des données d'image compressées par les premiers moyens de compression et des informations cryptées par les moyens de cryptage depuis une partie des données d'origine et depuis une partie représentative de l'image entière des données d'image d'origine.

22. Dispositif de codage selon la revendication 20 ou 21, **caractérisé en ce que** les moyens de transmission sont conçus pour transmettre, avec une qualité de transmission supérieure, les informations provenant des moyens de cryptage (7) comparativement aux informations provenant des premiers moyens de compression (3), comme avec une fourniture de détection d'erreur et/ou de correction d'erreur améliorées.

23. Dispositif de codage selon une ou plusieurs des revendications 15 à 22 incluse, **caractérisé en ce que** au moins les moyens de sélection (6), les moyens de cryptage (7) et, si applicable, les moyens (12) pour former une partie représentative de l'image entière sont formés afin d'être une unité séparée.

24. Dispositif de décodage (15) à utiliser lors de l'évaluation de la qualité d'image de données d'image reproduites à partir de données d'image d'origine transmises, compressées de manière dispersée, comportant une entrée (16) pour offrir des données d'image transmises, et des premiers moyens de décompression (18) pour reproduire des données d'image à partir des données d'image transmises, compressées de manière dispersée, pour délivrer, au niveau d'une sortie (19), des données d'image reproduites, **caractérisé par** des moyens de fractionnement (17) pour sélectionner, à partir des données d'image transmises, des informations cryptées d'une partie sélectionnée des données d'image d'origine, des moyens de déchiffrement (20) pour déchiffrer les informations cryptées des données d'image d'origine, et des moyens (24) pour évaluer la partie déchiffrée des données d'image d'origine et une partie correspondante des données d'image reproduites, pour évaluer la qualité d'image.

25. Dispositif de décodage selon la revendication 24, **caractérisé en ce que** les moyens de fractionnement (17) sont conçus pour sélectionner, à partir des données d'image reçues, des données d'identification pour les moyens d'évaluation (24), pour sélectionner, à partir des données d'image reproduites, une partie indiquée par les données d'identification.

26. Dispositif de décodage selon la revendication 24 ou 25, **caractérisé en ce que** les moyens de déchiffrement (20) sont conçus pour changer au moins régulièrement la manière de déchiffrer.

27. Dispositif de décodage selon une ou plusieurs des revendications 24 à 26 incluse, **caractérisé en ce que** des moyens (23) pour dé-authentifier les informations d'une partie des données d'image d'origine sont fournis.

28. Dispositif de décodage selon une ou plusieurs des revendications 24 à 27 incluse, **caractérisé en ce que** des seconds moyens de décompression (25) sont couplés entre les moyens de fractionnement (17) et les moyens d'évaluation (24), pour décompresser les informations d'une partie des données d'image d'origine transmises pour évaluer la qualité d'image.

29. Dispositif de décodage selon une ou plusieurs des revendications 24 à 28 incluse, **caractérisé par** des moyens (26), pour, à partir d'une partie transmise représentative d'une image complète des données d'image d'origine, évaluer la qualité de transmission.

30. Dispositif de décodage selon une ou plusieurs des revendications 24 à 29 incluse, **caractérisé en ce que** les moyens de fractionnement comportent un démultiplexeur (17), pour délivrer, à partir des données d'image transmises aux premiers moyens de décompression (18), les données d'image compressées de manière dispersée, pour délivrer, aux moyens de déchiffrement (20), les informations cryptées d'une partie des données d'image d'origine et, si applicable, pour délivrer, aux moyens (26) destinés à évaluer la qualité de transmission, la partie représentative d'une image complète des données d'image.

31. Dispositif de décodage selon une ou plusieurs des revendications 24 à 30 incluse, **caractérisé en ce qu'**au les moyens de déchiffrement (20), les moyens d'évaluation (24) et, si applicable, les moyens (26) pour évaluer la qualité de transmission sont contenus dans une unité séparée.

32. Dispositif de codage et de décodage, comportant une combinaison d'une ou plusieurs des revendications 15 à 23 incluse et 24 à 30 incluse.

33. Unité d'évaluation de qualité à utiliser avec un dispositif de codage/décodage pour évaluer la qualité d'image de données d'image reproduites à partir de données d'image d'origine transmises, compressées de manière dispersée et d'informations cryptées d'une partie des données d'image d'origine, comportant au moins les moyens tels que définis dans une des revendications 23 et 31 ou les deux.
